# EUROPEAN PATENT SPECIFICATION

(11) **EP 2 664 830 B1**
(45) Date of publication and mention of the grant of the patent: **24.02.2016**
(21) Application number: 13161936.3
(22) Date of filing: 02.04.2013
(51) Int. Cl.: F16K 11/07, G05D 23/13, F16K 11/00

(54) **Single-handle dual-control thermostatic faucets**
Thermostatisch gesteuerte Einhebelmischarmatur
Robinets thermostatiques de double commande à manche unique

(30) Priority: 16.05.2012 CN 201220221816 U
(43) Date of publication of application: 20.11.2013
(73) Proprietor: Suprema (Zhuhai J/V) Thermostatic Sanitaryware Co., Ltd, HongWan Industrial Zone Xiangzhou, Zhuhai 519000 (CN)
(72) Inventor: Xie, Qingjun, 519015 Zhuhai (CN)
(74) Representative: Stuttard, Garry Philip

(56) References cited:
- DE-A1- 3 525 052
- US-A- 3 685 728
- US-A- 3 765 604
- US-A- 5 709 339

## Description

### Field of Technology

The invention relates to the field of technology of plumbing equipment, and specifically to a thermostatic faucet.

### Background Art

Thermostatic faucets are widely applied in the sanitary water supply systems on various occasions. "Thermostatic" mainly means that the user can adjust the outlet water temperature according to the actual needs, and after the temperature is set, the mixed outlet water will keep a temperature above the set one. The thermostatic faucets are safe and scald-proof, being able to avoid the problem that the outlet water has an unstable temperature due to pressure change and temperature instability of the intake water via common valve spools. However, the existed single-handle thermostatic faucets can only realize the temperature setting and switching control of outlet water, but can't realize the free flow regulation of outlet water.

As we know, the thermostatic faucet's functions mainly depend on the functions integrated by its valve spool. With the technological progress and the users' increasingly demands for production functions, new thermostatic valve spools with more perfect functions have been worked out successfully and launched to the market.

For example, the utility model patent CN201034188 of China relates to a single-handle thermostatic valve spool, which is composed of a valve body, a valve bush, a regulator, a temperature sensor, a return spring, a temperature regulation assembly, a flow regulation assembly and a valve rod. The valve body is provided with a cold inlet water passage, a hot inlet water passage, and a mixed water cavity, and the regulation, temperature sensor and return spring are arranged inside the cavity, to make the outlet water keep a constant temperature. The valve rod respectively coordinates with the temperature regulation assembly and the flow regulation assembly without mutual interference, to realize the dual control of temperature and arranged inside the cavity, to make the outlet water keep a constant temperature. The valve rod respectively coordinates with the temperature regulation assembly and the flow regulation assembly without mutual interference, to realize the dual control of temperature and flow. Besides, the valve body is provided with a mixed outlet water channel on which the flow regulation assembly is arranged.

DE-A-3525052 relates to a sanitary mixer tap in the form of a single thermostat with at least one hot and cold water inlet and a mixed water outlet. The thermostat control and flow control are structurally combined in a replaceable cartridge held in the mixer tap.

Although the single-handle thermostatic valve spool of the utility model has the functions of constant temperature setting and outlet water flow regulating. However, the single-handle thermostatic valve spool is equipped with a specific valve bush and used for assembling in an existing standard faucet. The problem is that the waterway design of the existing standard faucet is not reasonable enough, mainly because of the limitations of the established structural of the specific valve bush, it is resulting in a smaller flow and inconvenient to use. Therefore, it is necessary to design a new type of thermostat faucet, which can abate limitations of existing spool valve sleeve waterway design so as to have more reasonable waterway increases.

### Summary of the Invention

The invention aims to provide a single-handle dual-control thermostatic faucet, which is a dual-function thermostatic faucet being able to realize flow regulation and switching control of the outlet water via the single handle.

The aim is realized via the following technical solution:
A single-handle dual-control thermostatic faucet comprises (eg is composed of) a valve body, a handle and a valve spool, and hot water inlet, cold water inlet and mixed water outlet are respectively arranged on the left, right and in front of the valve body. The single-handle dual-control thermostatic faucet comprises a valve spool which is a single-handle thermostatic valve pool being able to control water flow, which consists of a thermostatic mixed water assembly, a flow regulation assembly, and a driving lever for temperature and flow regulation. The hot water and cold water control holes of the thermostatic mixed water assembly respectively connect with the hot water and cold water inlets of the valve body; the water outlet end of the thermostatic mixed water assembly is connected to the water inlet end of the flow regulation assembly, and the mixed water outlet of the valve body is connected to the water outlet end of the flow regulation assembly; the handle is arranged on top of the valve body and connects and coordinates with the driving lever.

The hot water and cold water inlets are arranged with an annular support inwards, and the support is provided with hot water and cold water control holes at different heights respectively on the left and right sides, a mixed water hole at the bottom, and moreover, the support is provided with a longitudinal mixed water passing hole in the position away from the hot water and cold water inlets of the valve around.

A further solution is characterized in that: the thermostatic mixed water assembly of the valve spool comprises (eg is composed of) a return spring, a thermo-sensitive element, a regulator, a spring seat, a spring head, a buffer spring, a spring housing, a temperature regulating valve rod, a regulating nut, a valve rod bushing, a valve spool body, a clamp ring, a lubricating washer, and a regulating dial; the thermo-sensitive element connects and coordinates with the regulator which, being slideable up and down, is arranged between the hot water and cold water control holes; the lower end of the return spring is supported against the annular support of the valve body and the upper end is supported against the thermo-sensitive element, the return spring and the thermo-sensitive element coordinate with each other to jointly control the up-down moving of the regulator; the top of the thermo-sensitive element is connected with the spring head which, being moveable up and down, is assembled in the spring housing, the spring seat is arranged in the lower part of the spring housing to limit the spring head moving downwards, and the buffer spring is arranged between the top of the spring head and the inner wall of the spring housing; the temperature regulating valve rod is provided with an axial blind hole in the lower part and the upper part of the spring housing is penetrated to the blind hole; the regulating nut, which is adjustable in height, is arranged outside the bottom of the temperature regulating valve rod, and also the bottom of the regulating nut is supported against the top of the lower part of the spring housing; the lower part of the temperature regulating valve rod is provided with the valve rod bushing, and the lubricating washer is arranged between them; the top of the valve rod bushing is provided with the clamp ring used for limiting the temperature regulating valve rod moving up and down; the valve rod bushing is provided with valve spool body, and the lower ends of both the valve rod bushing and the valve spool body are supported on the annular support; the top of temperature regulating valve rod coordinates with the regulating dial, and the regulating dial connects and coordinates with the driving lever to drive the rotation of the temperature regulating valve rod under the drive by driving lever.

A further solution is characterized in that: the flow regulation assembly of the valve spool consists of valve spool consists of a flow-regulating inlet water sealing gasket, a flow-regulating outlet water sealing gasket, a static ceramic chip, a moving ceramic chip, a valve housing, a driving plate, a pin, a gland nut and the valve spool body and regulating dial; the valve spool body is provided with a mixed water transition channel and a mixed water outlet channel lengthways, in which the mixed water transition channel is connected to the mixed water passing hole of the support and the water inlet hole of the static ceramic chip, and the mixed water outlet channel is connected to the water outlet hole of the static ceramic chip and the mixed water outlet of the valve body; the valve spool body is provided with the static ceramic chip at the top, and the static ceramic chip is respectively arranged with the flow-regulating inlet water sealing gasket and flow-regulating outlet water sealing gasket at the positions of water inlet and water outlet; the moving ceramic chip is arranged above the static ceramic chip, and the driving plate is above and connects with the moving ceramic chip; the regulating dial provided with driving lever slots is arranged above the driving plate, and the lower part of driving lever passes through the driving lever slots and is hinged in the driving lever slots via the transversely set pin; the lower part of the driving lever coordinates with the driving plate in a drivable way; the valve housing is arranged in the upper part of the valve body and in the periphery of the static ceramic chip, moving ceramic chip, driving plate and regulating dial, and moreover, the valve housing is compressed tightly on the inner wall of the valve body via gland nut.

A further solution is characterized in that: a hot water feed pipe and a cold water feed pipe are included, both of which are respectively connected to the hot water and cold water inlets of the valve body.

A further solution is characterized in that: one end of the hot water feed pipe is connected to the hot water inlet of the valve body via connecting socket, and the other end is connected to the hot inlet water connector nut via the first connector which is provided with the first check valve inside.

A further solution is characterized in that: one end of the cold water feed pipe is connected to the cold water inlet of the valve body via connecting socket, and the other end is connected to the cold inlet water connector nut via the second connector which is provided with the second check valve inside.

The faucet of the invention can realize dual control via single handle, that is, it can realize switching, flow controlling and temperature setting of outlet water via one operating handle. The faucet, having a reasonable waterway design and a good practical effect, is safe, scald-proof, and easy to operate.

### Description of Figures

Figure 1 is the section view of the faucet given by the embodiment of the invention.
Figure 2 is the section view from another perspective of the faucet given by the embodiment of the invention.
Figure 3 is the section view of the thermostatic mixed water assembly and flow regulation assembly of the faucet given by the embodiment of the invention.

### Description of the Embodiments

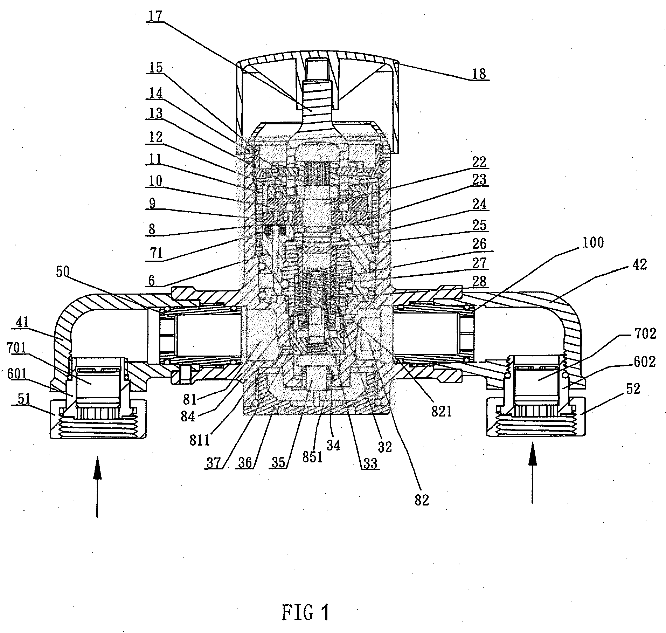

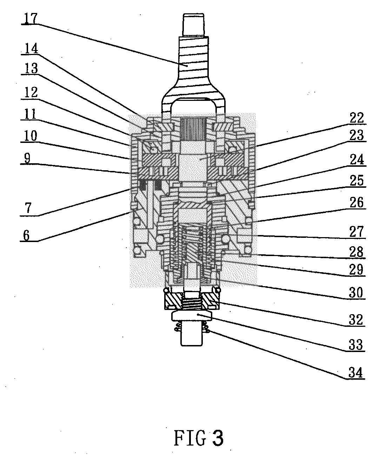

As shown in Figure 1, the single-handle dual-control thermostatic faucet in this embodiment is composed of a valve body 8, a valve bottom cap 36, a handle 18, a valve spool (refer to Figure 3: this valve spool is a single-handle thermostatic valve spool being able to control water flow, which will be specifically described below), a hot water feed pipe 41, a cold water feed pipe 42, a connecting socket 50, a hot inlet water connector nut 51, a cold inlet water connector nut 52, the first connector 601, the second connector 602, the first check valve 701, and the second check valve 702.

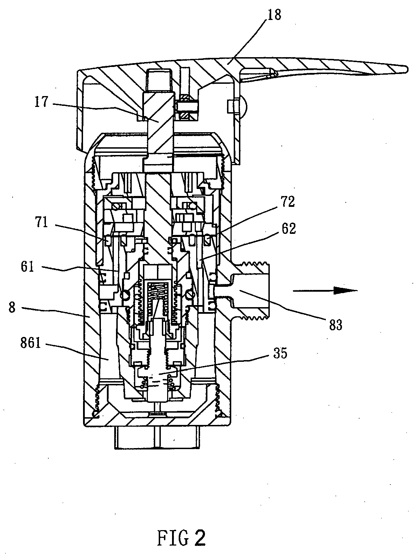

The valve body 8 is provided with an assembly cavity inside, the handle 18 at the top, and the valve bottom cap 36 at the bottom. The valve spool is arranged in the assembly cavity of the valve body 8. A driving lever 17 on the valve spool connects and coordinates with the handle 18, so that the handle 18 can be movably set at the opening place on top of the valve body 8 according to the given drive mode of the driving lever 17. A hot water inlet 81, a cold water inlet 82, and a mixed water outlet 83 (see Figure 2) are respectively arranged on the left and right sides as well as in the front of the valve body 8 (taking Figure 1 for reference). Wherein, the hot water inlet 81 and the cold water inlet 82 extend outwards to respectively form a joint, and they are provided with an annular support 84 inwards. The support 84 is provided with a hot water control hole 811 and a cold water control hole 821 at different heights respectively on the left and right sides, a mixed water hole 851 at the bottom. The support 84 is provided with a longitudinal mixed water passing hole 861 in the position away from the hot water and cold water inlets 81 and 82 around. Referring to Figure 2, it is discovered that the mixed water after mixing by the thermostatic mixed water assembly of the valve spool discharges to the bottom of the valve through the mixed water hole 851 and then flows upwards to the flow regulation assembly of the valve spool via the water hole 861.

According to Figures 1 and 3, it is shown that the valve spool is a single-handle thermostatic valve spool being able to control water flow, which is composed of a return spring 34, a thermo-sensitive element 35, a regulator 37, a spring seat 33, a spring head 28, a buffer spring 27, a spring housing 26, a temperature regulating valve rod 22, a regulating nut 32, a valve rod bushing 24, a clamp ring 23, a lubricating washer 25, a valve spool body 6 , a flow-regulating inlet water sealing gasket 71, a flow-regulating outlet water sealing gasket 72, a static ceramic chip 9, a moving ceramic chip 10, a valve housing 11, a driving plate 12, a regulating dial 13, a pin 14, a gland nut 15, and a driving lever 17.

Wherein, the thermo-sensitive element 35 connects and coordinates with the regulator 37, and the regulator 37, which is slideable up and down, is arranged between the hot water control hole 811 and the cold water control hole 821 under the drive by the thermo-sensitive element; the lower end of the return spring 34 is supported against the annular support 84 of the valve body and the upper end is supported against the thermo-sensitive element 35. The return spring 34 and the thermo-sensitive element 35 coordinate with each other to jointly control the up-down moving of the regulator 37, that is, when the thermo-sensitive element 35 expands with heat and contracts with cold, the regulator 37 will move up and down, so as to regulate the hot water control hole 811 and the cold water control hole 821 in size.

The top of the thermo-sensitive element 35 is connected with the spring head 28 which, being moveable up and down, is assembled in the spring housing 26, the spring seat 33 is arranged in the lower part of the spring housing 26 to limit the spring head 28 moving downwards, and the buffer spring 27 is arranged between the top of the spring head 28 and the inner wall of the spring housing 26. The temperature regulating valve rod 22 is provided with an axial blind hole in the lower part and the upper part of the spring housing 26 is penetrated to the blind hole. The regulating nut 32, which is adjustable in height, is arranged outside the bottom of the temperature regulating valve rod 22, and also the bottom of the regulating nut 32 is supported against the top of the lower part of the spring housing 26. The lower part of the temperature regulating valve 22 rod is provided with the valve rod bushing 24, and the lubricating washer 25 is arranged between them. The top of the valve rod bushing 24 is provided with the clamp ring 23 used for limiting the temperature regulating valve rod moving up and down. The valve rod bushing 24 is provided with valve spool body 6, and the lower ends of both the valve rod bushing 24 and valve spool body 6 are supported on the annular support 84. The valve spool body 6 is provided with a mixed water transition channel 61 and a mixed water outlet channel 62 lengthways, in which the mixed water transition channel 61 is connected to the mixed water passing hole 861 of the support 84 and the water inlet hole of the static ceramic chip 9, and the mixed water outlet channel 62 is connected to the water outlet hole of the static ceramic chip 9 and the mixed water outlet 83 of the valve body 8.

The valve spool body 6 is provided with the static ceramic chip 9 at the top, and the static ceramic chip 9 is respectively arranged with the flow-regulating inlet water sealing gasket 71 and flow-regulating outlet water sealing gasket 72 at the positions of water inlet and water outlet. Three bosses are arranged at the outer edge of the static ceramic chip 9 and the bosses are embedded to the three open slots inside the valve housing 11. The moving ceramic chip 10 above the static ceramic chip 9 is arranged with a flow control slot which is able to control the sizes of the water inlet and water outlet of the static ceramic chip 9; the specific structure of the flow control slot belongs to the prior art, so no unnecessary details will be given here. The driving plate 12 is provided with three bosses; the top of the moving ceramic chip 10 is set with three slots corresponding to the three bosses of the driving plate 12; and the driving plate 12 is arranged above and coordinates with the moving ceramic chip 10. The regulating dial 13 arranged above the driving plate 12 is provided with a temperature regulating valve rod mating hole, and the top of the temperature regulating valve rod 22 is embedded to the mating hole of the regulating dial 13 via the clamp threads set in the periphery; the temperature regulating valve rod mating hole is provided with driving lever slots on two sides, the driving lever 17 is of dual-branch structure in the lower part, and the two branches respectively pass through the driving lever slots and are hinged in the driving lever slots via the transversely set pin 14 . The lower parts of two branches of the driving lever 17 both coordinate with the driving plate 12 in a drivable way. A reversing slot coordinating with the slot hole of the valve housing 11 is set outside the upper part of the valve spool body 6. The valve housing 11 is arranged in the upper part of the valve body 6 and in the periphery of the static ceramic chip 9, moving ceramic chip 10, driving plate 12 and regulating dial 13, and moreover, and the valve housing 11 is compressed tightly on the inner wall of the valve body 8 via gland nut 15.

Moreover, according to Figure 1, it is shown that one end of the hot water feed pipe 41 is connected to the hot water inlet 81 of the valve body 8 via connecting socket 50, and the other end is connected to the hot inlet water connector nut 51 via the first connector 601 which is provided with the first check valve 701 inside. One end of the cold water feed pipe 42 is connected to the cold water inlet 82 of the valve body 8 via connecting socket 100, and the other end is connected to the cold inlet water connector nut 52 via the second connector 602 which is provided with the second check valve 702 inside.

The single-handle dual-control thermostatic faucet given by the embodiment above has the working principles of flow control and cold-and-hot water mixing as follows:
The cold water and the hot water flow to the cavity of the regulator 37 respectively via the cold water feed pipe 42 and the hot water feed pipe 41, the mixed water discharges to the bottom of the valve body 8 via the lower part of the thermo-sensitive element 35, then flows through the mixed water passing hole 861 upwards to enter the flow regulation assembly via the mixed water transition channel 61, and finally, after regulation by the static ceramic chip 9 and the moving ceramic chip 10, flows to the mixed water outlet 83 of the valve body 8 via the mixed water outlet channel 62. Wherein, when drawing the driving lever 17, it can drive the driving plate 12 to move and further drive the moving ceramic chip 10 to move, to realize the flow regulation; when drawing the driving lever 17, it can drive the regulating dial to rotate 13 and further drive the temperature regulating valve rod 22 to rotate, to realize the function of temperature regulation. After the temperature is set, when the water entering the valve body 8 has its temperature changed, the thermo-sensitive element 35, under the effect of heat-expansion and cold-contraction, enables the regulator 37 to move, so as to realize a dynamic constant temperature; when the water entering the valve body 8 has its pressure changed, the regulator 37, under the effect of water pressure, moves up and down, to regulate the inflow of the cold and hot water, so as to achieve the functions of making the water temperature keep constant and balancing the pressure. Besides, once cold water supply stops, the mixed outlet water will have its temperature reduced to a scald-proof one. So the device is safe and comfortable to use, water-saving and energy-saving.

The invention is not restricted to the embodiment above. Those simple substitutions based on the embodiment without creative work should belong to the range disclosed by the invention.

## Claims

1. A single-handle dual-control thermostatic faucet composed of a valve body (8), a handle (18) and a valve spool (6) and a hot water inlet (81), cold water inlet (82) and mixed water outlet (83) respectively arranged on the left, right and in front of the valve body (8); wherein the valve spool (6) is a single-handle thermostatic valve pool (6) being able to control water flow which consists of a thermostatic mixed water assembly, a flow regulation assembly and a driving lever (17) for temperature and flow regulation; wherein the hot water and cold water control holes (811, 821) of the thermostatic mixed water assembly respectively connect with the hot water and cold water inlets (81, 82) of the valve body (8); the water outlet end of the thermostatic mixed water assembly is connected to the water inlet end of the flow regulation assembly, and the mixed water outlet of the valve body (8) is connected to the water outlet end of the flow regulation assembly; the handle (18) is arranged on top of the valve body (8) and connects and coordinates with the driving lever (17);
**characterised in that** the hot water and cold water inlets (81, 82) are arranged with an annular support (84) inwards, and the support (84) is provided with hot water and cold water control holes (811, 821) around the valve body (8) at different heights respectively on the left and right sides, a mixed water hole (851) at the bottom, and the support (84) is provided with a longitudinal mixed water passing hole (861) in the position away from the hot water and cold water inlets (81,82).

2. The single-handle dual-control thermostatic faucet according to claim 1, wherein the thermostatic mixed water assembly of the valve spool (6) is composed of a return spring (34), a thermo-sensitive element (35), a regulator (37), a spring seat (33), a spring head (28), a buffer spring (27), a spring housing (26), a temperature regulating valve rod (22), a regulating nut (32), a valve rod bushing (24), a valve spool body (6), a clamp ring (23), a lubricating washer (25) and a regulating dial (13);
the thermo-sensitive element (35) connects and coordinates with the regulator (37) which, being slideable up and down, is arranged between the hot water and cold water control holes (811, 821); the lower end of the return spring (34) is supported against the annular support (84) of the valve body (8) and the upper end is supported against the thermo-sensitive element (35), the return spring (34) and the thermo-sensitive element (35) coordinate with each other to jointly control the up-down moving of the regulator (37); the top of the thermo-sensitive element (35) is connected with the spring head (28) which, being moveable up and down, is assembled in the spring housing (26), the spring seat (33) is arranged in the lower part of the spring housing (26) to limit the spring head (28) moving downwards, and the buffer spring (27) is arranged between the top of the spring head (28) and the inner wall of the spring housing (26);
the temperature regulating valve rod (22) is provided with an axial blind hole in the lower part and the upper part of the spring housing (26) is penetrated to the blind hole; the regulating nut (32), which is adjustable in height, is arranged outside the bottom of the temperature regulating valve rod (22), and also the bottom of the regulating nut (32) is supported against the top of the lower part of the spring housing (26); the lower part of the temperature regulating valve rod (22) is provided with the valve rod bushing (24), and the lubricating washer (25) is arranged between them;
the top of the valve rod bushing (24) is provided with the clamp ring (23) used for limiting the temperature regulating valve rod (22) moving up and down; the valve rod bushing (24) is provided with valve spool body (6), and the lower ends of both the valve rod bushing (24) and the valve spool body (6) are supported on the annular support (84); the top of temperature regulating valve rod (22) coordinates with the regulating dial (13), and the regulating dial (13) connects and coordinates with the driving lever (17) to drive the rotation of the temperature regulating valve rod (22) under the drive by driving lever (17).

3. The single-handle dual-control thermostatic faucet according to claim 2, wherein the flow regulation assembly of the valve spool (6) consists of valve spool (6) consists of a flow-regulating inlet water sealing gasket (71), a flow-regulating outlet water sealing gasket (72), a static ceramic chip (9), a moving ceramic chip (10), a valve housing (11), a driving plate (12), a pin (14), a gland nut (15) and the valve spool body (6) and regulating dial (13); the valve spool body (6) is provided with a mixed water transition channel (61) and a mixed water outlet channel lengthways (62), in which the mixed water transition channel (61) is connected to the mixed water passing hole (861) of the support (84) and the water inlet hole of the static ceramic chip (9), and the mixed water outlet channel (62) is connected to the water outlet hole of the static ceramic chip (9) and the mixed water outlet of the valve body (6); the valve spool body (6) is provided with the static ceramic chip (9) at the top, and the static ceramic chip (9) is respectively arranged with the flow-regulating inlet water sealing gasket (71) and flow-regulating outlet water sealing gasket (72) at the positions of water inlet and water outlet; the moving ceramic chip (10) is arranged above the static ceramic chip (9), and the driving plate (12) is above and connects with the moving ceramic chip (10); the regulating dial (13) provided with driving lever slots is arranged above the driving plate (12), and the lower part of driving lever (17) passes through the driving lever slots and is hinged in the driving lever slots via the transversely set pin; the lower part of the driving lever (17) coordinates with the driving plate (12) in a drivable way; the valve housing (11) is arranged in the upper part of the valve body and in the periphery of the static ceramic chip (9), moving ceramic chip (10), driving plate (12) and regulating dial (13), and moreover, the valve housing (11) is compressed tightly on the inner wall of the valve body (8) via gland nut (15).

4. The single-handle dual-control thermostatic faucet according to any preceding claim, wherein a hot water feed pipe (41) and a cold water feed pipe (42) are included, both of which are respectively connected to the hot water and cold water inlets (81, 82) of the valve body.

5. The single-handle dual-control thermostatic faucet according to claim 4, wherein one end of the hot water feed pipe (41) is connected to the hot water inlet (81) of the valve body (8) via connecting socket (50), and the other end is connected to the hot inlet water connector nut (51) via the first connector (601) which is provided with the first check valve (701) inside.

6. The single-handle dual-control thermostatic faucet according to claim 4, wherein one end of the cold water feed pipe (42) is connected to the cold water inlet (821) of the valve body (8) via connecting socket (100), and the other end is connected to the cold inlet water connector nut (52) via the second connector (602) which is provided with the second check valve (702) inside.

## Patentansprüche

1. Thermostatische Doppelsteuerungs-Einhand-Mischbatterie, welche gebildet wird aus einem Ventilkörper (8), einem Griff (18) und einem Ventilschieber (6) und einem Heißwassereinlass (81), einem Kaltwassereinlass (82) und einem Mischwasserauslass (83), welche an der linken, rechten bzw. Vorderseite des Ventilkörpers (8) angeordnet sind; wobei der Ventilschieber (6) ein thermostatischer Einhand-Ventilschieber (6) ist, welcher in der Lage ist, eine Wasserströmung zu steuern und welcher aus einer thermostatischen Mischwasseranordnung, einer Strömungsregulierungsanordnung und einem Führungshebel (17) für eine Temperatur- und Strömungsregelung besteht; wobei die Heißwasser- und Kaltwassersteuerlöcher (811, 821) der thermostatischen Mischwasseranordnung mit dem Heißwasser- bzw. Kaltwassereinlass (81, 82) des Ventilkörpers (8) verbunden sind; wobei das Wasserauslassende der thermostatischen Mischwasseranordnung mit dem Wassereinlassende der Strömungsregulierungsanordnung verbunden ist, und der Mischwasserauslass des Ventilkörpers (8) mit dem Wasserauslassende der Strömungsregulierungsanordnung verbunden ist; wobei der Griff an der Oberseite des Ventilkörpers (8) angeordnet ist und mit dem Führungshebel (17) verbunden und abgestimmt ist;
**dadurch gekennzeichnet, dass** der Heißwasser- und Kaltwassereinlass (81, 82) einwärts mit einem ringförmigen Halter (84) angeordnet sind und der Halter (84) ist versehen mit Heißwasser- und Kaltwassersteuerlöchern (811, 821), um den Ventilkörper (8) an unterschiedlichen Höhen an der linken bzw. rechten Seite, einem Mischwasserloch (851) an der Unterseite, und der Halter (84) ist versehen mit einem Mischwasserdurchgangsloch (861) in Längsrichtung in der Position weg von dem Heißwasser- und Kaltwassereinlass (81, 82).

2. Thermostatische Doppelsteuerungs-Einhand-Mischbatterie nach Anspruch 1, wobei die thermostatische Mischwasseranordnung des Ventilschiebers (6) aus einer Rückstellfeder (34), einem thermosensitiven Element (35), einem Regler (37), einem Federsitz (33), einem Federkopf (28), einer Pufferfeder (27), einem Federgehäuse (26), einem Temperatur-Regulierungs-Ventilstab (22), einer Regulierungsmutter (32), einer Ventilstabbuchse (24), einem Ventilschieberkörper (6), einem Klemmring (23), einer Schmierscheibe (25) und einer Reguliereinstellscheibe (13) gebildet wird;
wobei das thermosensitive Element (35) mit dem Regler (37) verbunden und abgestimmt ist, welcher nach oben und unten verschiebbar zwischen dem Heißwasser- und Kaltwassersteuerloch (811, 821) angeordnet ist; wobei das untere Ende der Rückstellfeder (34) gegen den ringförmigen Halter (84) des Ventilkörpers (8) gehalten wird und das obere Ende gegen das thermosensitive Element (35) gehalten wird, wobei die Rückholfeder (34) und das thermosensitive Element (35) aufeinander abgestimmt sind, um gemeinsam die Rauf-Runter-Bewegung des Reglers (37) zu steuern; wobei die Oberseite des thermosensitiven Elements (35) mit dem Federkopf (28) verbunden ist, welcher nach oben und unten beweglich in dem Federgehäuse (26) eingebaut ist, wobei der Federsitz (33) in dem unteren Teil des Federgehäuses (26) angeordnet ist, um den sich nach unten bewegenden Federkopf (28) zu begrenzen, und wobei die Pufferfeder (27) zwischen der Oberseite des Federkopfs (28) und der Innenwand des Federgehäuses (26) angeordnet ist;
wobei der Temperatur-Regulierungs-Ventilstab (22) mit einem axialen Blindloch in dem unteren Teil versehen ist und der obere Teil des Federgehäuses (26) zu dem Blindloch durchdringt; wobei die Regulierungsmutter (32), welche in der Höhe einstellbar ist, außerhalb der Unterseite des Temperatur-Regulierungs-Ventilstabs (22) angeordnet ist und ferner die Unterseite der Regulierungsmutter (32) gegen die Oberseite des unteren Teils des Federgehäuses (26) gehalten wird; wobei der untere Teil des Temperatur-Regulierungs-Ventilstabs (22) mit der Ventilstabbuchse (24) versehen ist, und wobei die Schmierscheibe (25) zwischen ihnen angeordnet ist;
wobei die Oberseite der Ventilstabbuchse (24) mit dem Klemmring (23) versehen ist, welcher verwendet wird, um den Temperatur-Regulierungs-Ventilstab (22), welcher sich nach oben und nach unten bewegt, zu begrenzen; wobei die Ventilstabbuchse (24) mit dem Ventilschieberkörper (6) versehen ist und die unteren Enden von sowohl der Ventilstabbuchse (24) als auch dem Ventilschieberkörper (6) auf der ringförmigen Halterung (84) gehalten werden; wobei die Oberseite des Temperatur-Regulierungs-Ventilstabs (22) auf die Reguliereinstellscheibe (13) abgestimmt ist und die Reguliereinstellscheibe (13) mit dem Führungshebel (17) verbunden und abgestimmt ist, um die Drehung des Temperatur-Regulierungs-Ventilstabs (22) unter der Führung des Führungshebels (17) zu steuern.

3. Thermostatische Doppelsteuerungs-Einhand-Mischbatterie nach Anspruch 2, wobei die Strömungsregulierungsanordnung des Ventilschiebers (6) aus einer strömungsregulierenden Einlasswasserabdichtungsdichtung (71), einer strömungsregulierenden Auslasswasserabdichtungsdichtung (72), einem feststehenden Keramikplättchen (9), einem beweglichen Keramikplättchen (10), einem Ventilgehäuse (11), einer Führungsplatte (12), einem Stift (14), einer Dichtschraubenmutter (15) und dem Ventilschieberkörper (6) und der Regelungseinstellscheibe (13) besteht; wobei der Ventilschieberkörper (6) mit einem Mischwasserüberleitungskanal (61) und einem Mischwasserausgangskanal (62) in Längsrichtung versehen ist, wobei der Mischwasserüberleitungskanal (61) mit dem Mischwasserdurchgangsloch (861) des Halters (84) und dem Wassereinlassloch des feststehenden Keramikplättchens (9) verbunden ist und der Mischwasserauslasskanal (62) mit dem Wasserausgangsloch des feststehenden Keramikplättchens (9) und dem Mischwasserauslass des Ventilkörpers (6) verbunden ist; wobei der Ventilschieberkörper (6) mit dem feststehenden Keramikplättchen (9) an der Oberseite versehen ist und das feststehende Keramikplättchen (9) jeweils mit der strömungsregulierenden Einlasswasserabdichtungsdichtung (71) und der strömungsregulierenden Auslasswasserabdichtungsdichtung (72) an den Positionen des Wassereinlasses und Wasserauslasses angeordnet ist; wobei das bewegliche Keramikplättchen (10) über dem feststehenden Keramikplättchen (9) angeordnet ist und die Führungsplatte (12) über dem beweglichen Keramikplättchen (10) ist und damit verbunden ist; wobei die Regulierungseinstellscheibe (13), welche mit Führungshebelschlitzen versehen ist, über der Führungsplatte (12) angeordnet ist und der untere Teil des Führungshebels (17) durch die Führungshebelschlitze verläuft und in den Führungshebelschlitzen über den querverlaufenden Setzstift drehbar ist; wobei der untere Teil des Führungshebels (17) mit der Führungsplatte (12) auf eine antreibbare Art abgestimmt ist; wobei das Ventilgehäuse (11) in dem oberen Teil des Ventilkörpers und in der Umgebung des feststehenden keramischen Plättchens (9) des beweglichen keramischen Plättchens (10), der Führungsplatte (12) und der Regulierungseinstellscheibe (13) angeordnet ist und überdies das Ventilgehäuse (11) fest auf die innere Wand des Ventilkörpers (8) über die Dichtschraubenmutter (15) gedrückt wird.

4. Thermostatische Doppelsteuerungs-Einhand-Mischbatterie nach einem der vorhergehenden Ansprüche, wobei eine Heißwasserzuführungsleitung (41) und eine Kaltwasserzuführungsleitung (42) einbezogen sind, welche mit dem Heißwasser- bzw. Kaltwassereinlass (81, 82) des Ventilkörpers verbunden sind.

5. Thermostatische Doppelsteuerungs-Einhand-Mischbatterie nach Anspruch 4, wobei ein Ende der Heißwasserzuführungsleitung (41) mit dem Heißwassereinlass (81) des Ventilkörpers (8) über eine Verbindungsbuchse (50) verbunden ist, und das andere Ende mit der Heißwassereinlass-Verbindungsmutter (51) über den ersten Verbinder (601) verbunden ist, welcher mit einem ersten Rückschlagventil (701) innenliegend versehen ist.

6. Thermostatische Doppelsteuerungs-Einhand-Mischbatterie nach Anspruch 4, wobei ein Ende der Kaltwasserzuführungsleitung (42) mit dem Kaltwassereinlass (821) des Ventilkörpers (8) über eine Verbindungsbuchse (100) verbunden ist, und das andere Ende mit der Kaltwassereinlass-Verbindungsmutter (52) über den zweiten Verbinder (602) verbunden ist, welcher mit einem zweiten Rückschlagventil (702) innenliegend versehen ist.

## Revendications

1. Robinet thermostatique à double commande et poignée unique constitué d'un corps de vanne (8), d'une poignée (18) et d'un tiroir (6) et d'une entrée d'eau chaude (81), d'une entrée d'eau froide (82) et d'une sortie d'eau mélangée (83) agencées, respectivement, sur la gauche, la droite et le devant du corps de vanne (8) ; le tiroir (6) est un tiroir thermostatique à poignée unique (6) étant apte à commander l'écoulement d'eau qui consiste en un ensemble d'eau mélangée thermostatique, un ensemble de réglage d'écoulement et un levier d'entraînement (17) pour réglage d'écoulement et de température ; les orifices de commande d'eau chaude et d'eau froide (811, 821) de l'ensemble d'eau mélangée thermostatique se raccordant, respectivement, aux entrées d'eau chaude et d'eau froide (81, 82) du corps de vanne (8) ; l'extrémité sortie d'eau de l'ensemble d'eau mélangée thermostatique étant raccordée à l'extrémité d'entrée d'eau de l'ensemble de réglage d'écoulement, et la sortie d'eau mélangée du corps de vanne (8) étant raccordée à l'extrémité de sortie d'eau de l'ensemble de réglage d'écoulement ; la poignée (18) étant agencée sur le dessus du corps de vanne (8) et se raccordant et coordonnant avec le levier d'entraînement (17) ;
**caractérisé en ce que** les entrées d'eau chaude et d'eau froide (81, 82) sont agencées avec un support annulaire (84) vers l'intérieur, et le support (84) est pourvu d'orifices de commande d'eau chaude et d'eau froide (811, 821) autour du corps de vanne (8) à différentes hauteurs, respectivement, sur les côtés gauche et droit, un orifice d'eau mélangée (851) sur le bas, et le support (84) est équipé d'un orifice de passage d'eau mélangée longitudinal (861) dans la position à distance des entrées d'eau chaude et d'eau froide (81, 82).

2. Robinet thermostatique à double commande et poignée unique selon la revendication 1, dans lequel l'ensemble d'eau mélangée thermostatique du tiroir (6) est constitué d'un ressort de rappel (34), d'un élément thermosensible (35), d'un régulateur (37), d'un siège de ressort (33), d'une tête de ressort (28), d'un ressort tampon (27), d'un logement de ressort (26), d'une tige de vanne de réglage de température (22), d'un écrou de réglage (32), d'une douille de tige de vanne (24), d'un corps de tiroir (6), d'une bague de serrage (23), d'une rondelle de lubrification (25) et d'un cadran de réglage (13) ;
l'élément thermosensible (35) se raccorde et coordonne avec le régulateur (37) qui, étant apte à glisser vers le haut et vers le bas, est agencé entre les orifices de commande d'eau chaude et d'eau froide (811, 821) ; l'extrémité inférieure du ressort de rappel (34) est supportée contre le support annulaire (84) du corps de vanne (8) et l'extrémité supérieure est supportée contre l'élément thermosensible (35), le ressort de rappel (34) et l'élément thermosensible (35) se coordonnent l'un avec l'autre pour commander, conjointement, le déplacement vers le haut et vers le bas du régulateur (37) ; le dessus de l'élément thermosensible (35) est raccordé avec la tête de ressort (28) qui, étant apte à glisser vers le haut et vers le bas, est assemblée dans le logement de ressort (26), le siège de ressort (33) est agencé dans la partie inférieure du logement de ressort (26) pour limiter la tête de ressort (28) se déplaçant vers le bas, et le ressort tampon (27) est agencé entre le dessus de la tête de ressort (28) et la paroi interne du logement de ressort (26) ;
la tige de vanne de réglage de température (22) est pourvue d'un trou borgne axial dans la partie inférieure et la partie supérieure du logement de ressort (26) s'étend jusqu'au trou borgne ; l'écrou de réglage (32), qui est réglable en hauteur, est agencé à l'extérieur du bas de la tige de vanne de réglage de température (22), et, en outre, le dessous de l'écrou de réglage (32) est supporté contre le dessus de la partie inférieure du logement de ressort (26) ; la partie inférieure de la tige de vanne de réglage de température (22) est pourvue de la douille de tige de vanne (24), et la rondelle de lubrification (25) est agencée entre elles ;
le dessus de la douille de tige de vanne (24) est pourvu de la bague de serrage (23) utilisée pour limiter la tige de vanne de réglage de température (22) se déplaçant vers le haut et vers le bas ; la douille de tige de vanne (24) est pourvue du corps de tiroir (6), et les extrémités inférieures de la douille de tige de vanne (24) et du corps de tiroir (6) sont supportées sur le support annulaire (84) ; le haut de la tige de vanne de réglage de température (22) se coordonne avec le cadran de réglage (13), et le cadran de réglage (13) se raccorde et se coordonne avec le levier d'entraînement (17) pour entraîner la rotation de la tige de vanne de réglage de température (22) sous l'effet de la commande du levier d'entraînement (17).

3. Robinet thermostatique à double commande et poignée unique selon la revendication 2, dans lequel l'ensemble de réglage d'écoulement du tiroir (6) consiste en un tiroir (6), consiste en un joint d'étanchéité d'eau d'entrée à réglage d'écoulement (71), un joint d'étanchéité d'eau de sortie à réglage d'écoulement (72), une pastille de céramique statique (9), une pastille de céramique mobile (10), un boîtier de vanne (11), une plaque d'entraînement (12), une goupille (14), un écrou libre (15) et le corps de tiroir (6) et le cadran de réglage (13) ; le corps de tiroir (6) est doté d'un canal de transition d'eau mélangée (61) et de longueurs de canal de sortie d'eau mélangée (62), le canal de transition d'eau mélangée (61) étant raccordé à l'orifice de passage d'eau mélangée (861) du support (84) et à l'orifice d'entrée d'eau de la pastille de céramique statique (9), et le canal de sortie d'eau mélangée (62) étant raccordé à l'orifice de sortie d'eau de la pastille de céramique statique (9) et à la sortie d'eau mélangée du corps de vanne (6) ; le corps de tiroir (6) est pourvu de la pastille de céramique statique (9) en son sommet, et la pastille de céramique statique (9) est, respectivement, agencée avec le joint d'étanchéité d'eau d'entrée à réglage d'écoulement (71) et le joint d'étanchéité d'eau de sortie à réglage d'écoulement (72) en les positions d'entrée d'eau et de sortie d'eau ; la pastille de céramique mobile (10) est agencée au-dessus de la pastille de céramique statique (9), et la plaque d'entraînement (12) se trouve au-dessus de la pastille de céramique mobile (10) et se raccorde avec elle ; le cadran de réglage (13) pourvu de fentes de levier d'entraînement est agencé au-dessus de la plaque d'entraînement (12), et la partie inférieure du levier d'entraînement (17) passe par les fentes de levier d'entraînement et est articulée dans les fentes de levier d'entraînement par le biais de la goupille placée transversalement ; la partie inférieure du levier d'entraînement (17) se coordonne avec la plaque d'entraînement (12) en entraînement ; le boîtier de vanne (11) est agencé dans la partie supérieure du corps de vanne et dans la périphérie de la pastille de céramique statique (9), la pastille de céramique mobile (10), la plaque d'entraînement (12) et le cadran de réglage (13) et, en outre, le boîtier de vanne (11) est étroitement comprimé sur la paroi interne du corps de vanne (8) par le biais de l'écrou libre (15).

4. Robinet thermostatique à double commande et poignée unique selon l'une quelconque des revendications précédentes, dans lequel une conduite d'alimentation en eau chaude (41) et une conduite d'alimentation en eau froide (42) sont incluses, les deux étant respectivement raccordées aux entrées d'eau chaude et d'eau froide (81, 82) du corps de vanne.

5. Robinet thermostatique à double commande et poignée unique selon la revendication 4, dans lequel une extrémité de la conduite d'alimentation en eau chaude (41) est raccordée à l'entrée d'eau chaude (81) du corps de vanne (8) par le biais d'une douille de connexion (50), et l'autre extrémité est raccordée à l'écrou de connexion d'eau d'entrée chaude (51) par le biais du premier raccord (601) qui est équipé, en son sein, du premier clapet de non-retour (701).

6. Robinet thermostatique à double commande et poignée unique selon la revendication 4, dans lequel une extrémité de la conduite d'alimentation en eau froide (42) est raccordée à l'entrée d'eau froide (82) du corps de vanne (8) par le biais d'une douille de connexion (100), et l'autre extrémité est raccordée à l'écrou de connexion d'eau d'entrée froide (52) par le biais du second raccord (602) qui est équipé, en son sein, du second clapet de non-retour (702).
